(19) **Europäisches Patentamt**
**European Patent Office**
**Office européen des brevets**

(11) **EP 3 919 529 A1**

(12) **EUROPEAN PATENT APPLICATION**

(43) Date of publication:
**08.12.2021 Bulletin 2021/49**

(51) Int Cl.:
***C08F 210/06*** (2006.01)          ***C08F 4/659*** (2006.01)

(21) Application number: **20178273.7**

(22) Date of filing: **04.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Total Research & Technology Feluy**
**7181 Seneffe (BE)**

(72) Inventors:
• **VANTOMME, Aurélien**
  **7070 Mignault (BE)**
• **CIRRIEZ, Virginie**
  **1410 Waterloo (BE)**
• **WELLE, Alexandre**
  **1490 Court-St-Etienne (BE)**

(74) Representative: **Garcia Martin, Margarita**
**Total Research & Technology Feluy**
**Patent Department**
**Zone Industrielle Feluy C**
**7181 Seneffe (BE)**

(54) **PROCESS TO PRODUCE PROPYLENE COPOLYMER, THE POLYPROPYLENE PRODUCED AND ARTICLES MADE FROM THIS POLYPROPYLENE**

(57) The disclosure relates to polypropylene, having content of "m" sequences of at least 50 % as determined by $^{13}$C-NMR analysis, a content of mmmm pentads of at least 45 % as determined by $^{13}$C-NMR analysis, a content of "r" sequences of at least 20 % as determined by $^{13}$C-NMR analysis, wherein the polypropylene is a copolymer of propylene and one or more comonomers selected from ethylene and $C_4$-$C_{20}$ comonomers, wherein the comonomer content of the polypropylene is ranging from 0.2 to 5.0 wt.% relative to the total weight of polypropylene as determined by $^{13}$C-NMR analysis, and wherein the content of comonomer in the "r" sequences is higher than the content of comonomer in the "m" sequences.

**Description**

**Technical field**

The present disclosure relates to chemicals blends of syndiotactic polypropylenes and isotactic polypropylenes. The disclosure also relates to articles produced from these blends as well as processes for producing these blends. The disclosure also relates to the products produced by these chemical blends.

**Technical background**

Polypropylene is well known for the manufacture of different kind of articles such as fibres or films, for instance, heat seal layer films.

Heat seal layers films are commonly used in the manufacture of bi-axially oriented multilayer polypropylene films (BOPP films). BOPP films generally comprise a core layer of polypropylene; with preference, of a homopolymer of propylene, that is sandwiched between two surface layers that provide surface properties. When sealing properties are required, the surface layers can be made from propylene copolymer and are named heat seal layers.

Continuous efforts are made to improve such heat seal layers for BOPP films. The targeted properties are a combination of characteristics including a low seal initiation temperature, good hot tack and high stiffness properties. The low seal initiation is desired to have the film not sticking on the rolls during BOPP production. Hot tack properties allow having the heat seal layer in a vertical-form-fill-seal packaging system in the broadest possible range of temperature and speed. Moreover, it is also desirable to propose production processes for films comprising a heat seal layer that are cost-effective.

EP1588843 discloses a polyolefin-based biaxially oriented multi-layer film having at least one surface layer comprising a propylene-ethylene random copolymer which is obtained through sequential polymerization catalyzed by a metallocene component. In such sequential polymerization, the propylene-ethylene random copolymer component produced in the first step has an ethylene content of 1 to 7 wt.% and the propylene-ethylene random copolymer component produced in the second step has an ethylene content of 6 to 15 wt.% higher than that of the polymer component obtained in the first step. The propylene-ethylene random copolymer has a high melt flow rate of at least 16 g/10 min, which increases the risk of heat seal layer thickness issues when used in a multi-layer BOPP production.

EP1169499 describes a polymer blend comprising from 0.3 to 50 % by weight of a syndiotactic polypropylene having a multimodal molecular weight distribution, and at least 50 % by weight of isotactic polypropylene. It was found that, when blended with an isotactic polypropylene, multimodal syndiotactic polypropylene increases the processability of the polypropylene blend as compared to monomodal syndiotactic polypropylene, particularly to form fibres in a spinning process.

WO03029303 describes a catalyst system to produce homogeneous isotactic polypropylene and syndiotactic polypropylene blends wherein two different catalysts components are blended and supported in similar support.

EP0742227 discloses a composition of isotactic and syndiotactic polypropylene with a plasticizer being hemi-isotactic polypropylene. The composition is prepared by a metallocene catalyst.

EP0747406 relates to a metallocene catalyst useful in preparing syndiotactic/isotactic block polyolefins. The catalyst comprises a bridged metallocene in which one of the cyclopentadienyl rings is substituted differently from the other ring. In the examples, two metallocenes were used to produce an isotactic polypropylene with a low fraction of syndiotactic polypropylene of less than 10 wt.%.

There is a need to provide new polypropylene suitable for heat-seal layers and a new process to produce said polypropylene.

**Summary**

According to a first aspect, the disclosure relates to a polypropylene, wherein the polypropylene has:

- a content of "m" sequences of at least 50 % as determined by $^{13}$C-NMR analysis,
- a content of mmmm pentads of at least 45 % as determined by $^{13}$C-NMR analysis,
- a content of "r" sequences of at least 20 % as determined by $^{13}$C-NMR analysis,

wherein the polypropylene is a copolymer of propylene and one or more comonomers selected from ethylene and $C_4$-$C_{20}$ comonomers, wherein the comonomer content of the polypropylene is ranging from 0.2 to 5.0 wt.% relative to the total weight of polypropylene as determined by $^{13}$C-NMR analysis, and wherein the content of comonomer in the "r" sequences is higher than the content of comonomer in the "m" sequences.

It has been discovered that it was possible to obtain a chemical blend of syndiotactic and isotactic polypropylene, with a specific distribution of comonomer resulting in a low seal initiation temperature, suitable for heat-seal layers, and that can be produced in a single reactor, therefore, making its production process more cost-effective. Indeed, since the polypropylene is a chemical blending of two components being a syndiotactic polypropylene and an isotactic polypropylene, it shows two melting temperatures (i.e. two peaks in a DSC curves). The distribution of comonomer between the "r" sequences is higher than the content of comonomer in the "m" sequences resulting in a further lowering of the lowest melting temperature.

With preference, one or more of the following features can be used to further define the said polypropylene:

- The comonomer content of the polypropylene is ranging from 0.2 to 4.5 wt.% relative to the total weight of polypropylene, preferably ranging from 0.3 to 4.0 wt.%, more preferably ranging from 0.4 to 3.0 wt.%, even more preferably ranging from 0.5 to 2.0 wt.% as determined by $^{13}$C-NMR analysis.
- The content of "m" sequences is of at least 60% as determined by $^{13}$C-NMR analysis, preferably of at least 63%, more preferably of at least 65%.
- The content of "m" sequences is of at most 80% as determined by $^{13}$C-NMR analysis, preferably of at most 77%, more preferably of at most 75%.
- The comonomer distribution ratio between the "r" sequences and the "m" sequences is at least 1.5:1.0 as determined by $^{13}$C-NMR analysis, preferably 2.0:1.0, more preferably 3.0:2.0.
- The polypropylene has a content of mmmm pentads ranging from 45 % to 80 % as determined by $^{13}$C-NMR analysis. Preferably, the content of mmmm pentads is at most 78%, more preferably it is at most 75 %. With preference, the content of mmmm pentads is at least 48%, more preferably it is at least 50%.
- The polypropylene has a content of rrrr pentads ranging from 10 % to 45 % as determined by $^{13}$C-NMR analysis. Preferably, the content of rrrr pentads is at most 40 %, more preferably it is at most 38 %. With preference, the content of rrrr pentads is at least 10 %, more preferably at least 20 %, even more preferably it is at least 25 % or at least 30 %.
- The polypropylene has a DSC curve with at least two temperature peaks corresponding to at least two melting temperatures Tm1 and Tm2 and the lowest melting temperature is at most 130 °C, preferably is at most 128 °C, and more preferably is at most 125 °C.
- The polypropylene has a DSC curve with at least two temperature peaks corresponding to at least two melting temperatures Tm1 and Tm2 and the highest melting temperature is at least 135 °C, preferably is at least 138 °C, and more preferably is at least 140 °C.
- The polypropylene shows at least two melting temperatures Tm1 and Tm2 and the difference between the two melting temperatures Tm1 and Tm2 is at least 30 °C; preferably at least 32 °C; preferably at least 35 °C, more preferably at least 37 °C.
- At least 55wt.% of comonomer, as based on the total comonomer weight in the polypropylene is found in the "r" sequences as determined by $^{13}$C-NMR analysis, preferably at least 60 wt.%, more preferably at least 62 wt.%.
- At least 20 wt.% of comonomer, as based on the total comonomer weight in the polypropylene is found in the "m" sequences as determined by $^{13}$C-NMR analysis, preferably at least 25 wt.%, more preferably at least 30 wt.%.
- The polypropylene has a xylene soluble fraction of at least 15 % as determined by ASTM D5492-17, preferably of at least 20 % more preferably of at least 25 %.
- The polypropylene has a molecular weight distribution ranging from 2 to 5, preferably ranging from 2.5 to 4.
- The polypropylene blend has a melt flow index ranging from 0.1 to 10 g/10 min, preferably ranging from 0.2 to 5 g/10 min, more preferably ranging from 0.5 to 2 g/10 min as determined according to ISO 1133 at 230 °C under a load of 2.16 kg.

According to a second aspect, the disclosure provides a process for the production of the polypropylene in accordance with the first aspect, said process comprising the step of polymerizing propylene monomer and one or more olefin comonomers selected from ethylene and $C_4$-$C_{20}$ comonomer, in one or more polymerization reactors in presence of a catalyst composition wherein said catalyst composition comprises a mixture of a single-site catalyst component A and a single-site catalyst component B;

with the single-site catalyst component A having the formula

$$(Ind)_2R^1MQ_2 \text{ (1) or } (IndH_4)_2R^2MQ_2 \qquad (2)$$

wherein

- each Ind is the same or different and is a substituted or unsubstituted indenyl group;
- each ($IndH_4$) is the same or different and is a substituted or unsubstituted tetrahydroindenyl group;

- R$^1$ and R$^2$ are each a structural bridge imparting stereorigidity to the component and are selected from -(CR$^3$R$^4$)$_p$- or -(SiR$^3$R$^4$)$_p$- with p = 1 or 2, preferably it is -(SiR$^3$R$^4$)-;
- R$^3$ and R$^4$ are each independently selected from the group consisting of hydrogen, C$_1$-C$_{10}$ alkyl, C$_5$-C$_7$ cycloalkyl, C$_6$-C$_{15}$ aryl, alkylaryl with C$_1$-C$_{10}$ alkyl and C$_6$-C$_{15}$ aryl, or any two neighbouring R may form a cyclic saturated or non-saturated C$_4$-C$_{10}$ ring; each R$^3$ and R$^4$ may, in turn, be substituted in the same way;

- M is selected from Ti, Zr, or Hf;
- Q is hydrocarbyl radical such as an alkyl, aryl, alkenyl, alkylaryl, or arylalkyl radical having 1-20 carbon atoms or is a halogen;

and with the single-site catalyst component B having the formula

$$R^1(CpR^5_s)(FluR^6_t)MQ_2 \qquad (3)$$

wherein

- Cp is a substituted or unsubstituted cyclopentadienyl ring;
- Flu is a substituted or unsubstituted fluorenyl ring;
- each R$^5$ and R$^6$ is the same or different and is hydrogen or hydrocarbyl radical having from 1-20 carbon atoms, a halogen, an alkoxy, and alkoxy alkyl or an alkylamino radical;
- s is an integer of from 0-4;
- t is an integer of from 0-8;

- R$^1$ is a structural bridge imparting stereorigidity to the component and is selected from -(CR$^3$R$^4$)$_p$- or -(SiR$^3$R$^4$)$_p$- with p = 1 or 2, preferably it is -(SiR$^3$R$^4$)-;
- R$^3$ and R$^4$ are each independently selected from the group consisting of hydrogen, C$_1$-C$_{10}$ alkyl, C$_5$-C$_7$ cycloalkyl, C$_6$-C$_{15}$ aryl, alkylaryl with C$_1$-C$_{10}$ alkyl and C$_6$-C$_{15}$ aryl, or any two neighbouring R may form a cyclic saturated or non-saturated C$_4$-C$_{10}$ ring; each R$^3$ and R$^4$ may, in turn, be substituted in the same way;

- M is selected from Ti, Zr, or Hf;
- Q is hydrocarbyl radical such as an alkyl, aryl, alkenyl, alkylaryl, or arylalkyl radical having 1-20 carbon atoms or is a halogen.

The single-site catalysts used in the disclosure are preferably metallocene catalysts.

Surprisingly, it has been found that such a catalyst composition could be used to perform the polymerization of a chemical blend of syndiotactic and isotactic polypropylene copolymer with a content of comonomer being different in the syndiotactic component from the isotactic component of the polypropylene. The disclosure allows producing a chemical blend of polypropylene, wherein the content of the syndiotactic and the isotactic component in the final blend can be adapted on the needs and wherein, in addition, the syndiotactic component has a comonomer content higher than the isotactic one. The disclosure allows the production of polypropylene suitable for heat-seal layer in a single reactor.

With preference, one or more of the following features can be used to further define the said process:

- The catalyst composition comprises from 60 to 90 wt.% of the single-site catalyst component A as based on the total weight of both the single-site catalyst components A and B contained in the catalyst composition.
- The polymerization reaction is performed in a single reactor, with preference in a bulk reactor.

With preference, the single-site catalyst component A has the formula:

$$(Ind)_2R^1MQ_2 \qquad (1)$$

wherein:

- each Ind is the same or different and is a substituted or unsubstituted indenyl group;
- R$^1$ is a structural bridge imparting stereorigidity to the component and is selected from an isopropylidene, Me$_2$C, Ph$_2$C, ethylenyl, Me$_2$S or Me$_2$Si group;
- M is selected from Ti, Zr, or Hf;
- Q is hydrocarbyl radical such as an alkyl, aryl, alkenyl, alkylaryl, or arylalkyl radical having 1-20 carbon atoms or is a halogen.

More preferably, the single-site catalyst component A is selected from $Me_2Si(2$-Me-Benz-Ind$)_2ZrCl_2$ ; $Me_2Si(2$-Me-4-Naphthyl-Ind$)_2ZrCl_2$ ; $Me_2Si(2$-Me-Ind$)_2ZrCl_2$; Et(Ind$)_2ZrCl_2$; Et(IndH$_4)_2ZrCl_2$; $Me_2Si(2$-Me-4,5-Benzyl-Ind$)_2ZrCl_2$; $(C_6H_{11})(Me)Si(2$-Me-4-(4'tBuPh)Ind$)_2ZrCl_2$ ; even more preferably the single-site catalyst component A is $(C_6H_{11})(Me)Si(2$-Me-4-(4'tBuPh)Ind$)_2ZrCl_2$.

According to a third aspect, the disclosure relates to an article comprising the polypropylene in accordance with the first aspect and/or the polypropylene produced in accordance with the second aspect, wherein the article is a film, with preference the article is a biaxially oriented multi-layered film.

According to a fourth aspect, the disclosure relates to the use of a single-site-based catalytic system comprising a catalyst composition comprising a mixture of a single-site catalyst component A and a single-site catalyst component B; with the single-site catalyst component A having the formula:

$$(Ind)_2R^1MQ_2 \ (1) \ or \ (IndH_4)_2R^2MQ_2 \qquad (2)$$

wherein

- each Ind is the same or different and is a substituted or unsubstituted indenyl group;
- each (IndH$_4$) is the same or different and is a substituted or unsubstituted tetrahydroindenyl group;
- $R^1$ and $R^2$ are each a structural bridge imparting stereorigidity to the component and are selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighbouring R may form a cyclic saturated or non-saturated $C_4$-$C_{10}$ ring; each $R^3$ and $R^4$ may, in turn, be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen;

and with the single-site catalyst component B having the formula:

$$R^1(CpR^5_s)(FluR^6_t)MQ_2 \qquad (3)$$

wherein

- Cp is a substituted or unsubstituted cyclopentadienyl ring;
- Flu is a substituted or unsubstituted fluorenyl ring;
- each $R^5$ and $R^6$ is the same or different and is hydrogen or hydrocarbyl radical having from 1-20 carbon atoms, a halogen, an alkoxy, and alkoxy alkyl or an alkylamino radical;
- s is an integer of from 0-4;
- t is an integer of from 0-8;
- $R^1$ is a structural bridge imparting stereorigidity to the component and is selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighbouring R may form a cyclic saturated or non-saturated $C_4$-$C_{10}$ ring; each $R^3$ and $R^4$ may, in turn, be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen;

for the production of a heat-seal layer made from polypropylene, preferably from the polypropylene according to the first aspect.

**Description of the figures**

- Figure 1 represents Size Exclusion Chromatography curves of the polypropylene according to the disclosure.
- Figure 2 represents DSC curves of the polypropylene according to the disclosure.
- Figure 3 is a graph plotting the melting temperature and the ethylene concentration for the "r" sequences and the "m" sequences of the polypropylene according to the disclosure.

**Detailed description**

For the disclosure, the terms "syndiotactic polypropylene" (sPP) and "syndiotactic propylene polymer" may be used synonymously. The term "single-site catalyst syndiotactic polypropylene" is used to denote a polypropylene produced with a single-site-based polymerisation catalyst. Amongst single-site catalysts, metallocene catalysts are preferred. In such case, the produced "metallocene syndiotactic polypropylene" will be labelled "msPP" but, as all industrial syndiotactic polypropylene grades are produced from metallocene catalysts, "msPP" is often simplified as "sPP").

Similarly, the terms "isotactic polypropylene" (iPP) and "isotactic propylene polymer" may be used synonymously. The term "single-site catalyst isotactic polypropylene" is used to denote a polypropylene produced with a single-site-based polymerisation catalyst. Amongst single-site catalysts, metallocene catalysts are preferred. In such a case, the produced "metallocene isotactic polypropylene" will be labelled "miPP".

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

The particular features, structures, characteristics or embodiments may be combined in any suitable manner, as would be apparent to a person skilled in the art from this disclosure, in one or more embodiments.

The terms "polypropylene", "propylene polymer" or "propylene copolymer" as used herein refer respectively to the polypropylene fluff or powder. The terms "fluff" or "powder" as used herein refer to the polypropylene material with the hard catalyst particle at the core of each grain and is defined as the polymer material after it exits the polymerisation reactor (or final polymerisation reactor in the case of multiple reactors connected in series).

The disclosure provides a chemical blend of isotactic and syndiotactic polypropylene. The blend is preferably performed in a single bulk reactor with a single site-based catalytic system comprising two single-site catalyst components on the same support. Advantageously the single site catalyst components are a metallocene-based catalytic system.

The disclosure provides a propylene copolymer suitable for use as a heat-seal layer for biaxially oriented multi-layer films.

The polypropylene of the disclosure is a chemical blend of isotactic and syndiotactic polypropylene. According to the disclosure, isotactic and syndiotactic polypropylene are chemically blended because they have been together in the same reactor. As a result, the said polypropylene shows both isotactic and syndiotactic characteristics. Per the disclosure, the polypropylene has:

- a content of "m" sequences of at least 50 % as determined by $^{13}$C-NMR analysis,
- a content of mmmm pentads of at least 45 % as determined by $^{13}$C-NMR analysis,
- a content of "r" sequences of at least 20 % as determined by $^{13}$C-NMR analysis,

Moreover, the polypropylene of the disclosure is a copolymer of propylene and one or more comonomers selected from ethylene and $C_4$-$C_{20}$ comonomer, wherein the comonomer content of the polypropylene is ranging from 0.2 to 5.0 wt.% relative to the total weight of polypropylene as determined by $^{13}$C-NMR analysis.

Also, the polypropylene of the disclosure has a specific distribution of the commoner content wherein the content of comonomer in the "r" sequences is higher than the content of comonomer in the "m" sequences. The designation "m" or "r" describes the stereochemistry of pairs of contiguous propylene groups, "m" referring to meso and "r" to racemic.

This specificity leads to polypropylene having DSC curves with at least two temperature peaks, preferably with two temperature peaks corresponding to at least two melting temperatures Tm1 and Tm2 as it will be demonstrated in the examples. In a preferred embodiment, the lowest temperature peak corresponding to the lowest melting temperature Tm1 is at most 130 °C, preferably is at most 128 °C, and more preferably is at most 125°C. In another preferred embodiment, the highest temperature peak corresponding to the highest melting temperature Tm2 is at least 135 °C, preferably is at least 138 °C, and more preferably is at least 140 °C.

For example, the polypropylene shows at least two melting temperatures Tm1 and Tm2 and the difference between the two melting temperatures Tm1 and Tm2 is at least 30 °C; preferably at least 32 °C; preferably at least 35 °C, more preferably at least 37 °C.

With preference, the comonomer content of the polypropylene is ranging from 0.2 to 4.5 wt.% relative to the total weight of polypropylene as determined by $^{13}$C-NMR analysis, preferably ranging from 0.3 to 4.0 wt.%, more preferably ranging from 0.4 to 3.0 wt.%, even more preferably ranging from 0.5 to 2.0 wt.%. The comonomer content of the polypropylene is determined by $^{13}$C-NMR analysis.

The polypropylene of the disclosure is a copolymer of propylene and at least one comonomer, or a mixture thereof. Suitable comonomers can be selected from the group consisting of ethylene and aliphatic $C_4$-$C_{20}$ alpha-olefins.

Example of suitable aliphatic $C_4$-$C_{20}$ alpha-olefins include 1-butene, 1-pentene, 4-methyl-1-pentene, 1-hexene, 1-octene, 1-decene, 1-dodecene, 1-tetradecene, 1-hexadecene, 1-octadecende and 1-eicosene. Preferably, the comonomer is ethylene.

In a preferred embodiment, the comonomer is distributed between the "r" sequences and the "m" sequences of the polypropylene according to the disclosure with a comonomer distribution ratio of at least 1.5:1.0, preferably 2.0:1.0, more preferably 3.0:2.0. The comonomer is always predominant in the "r" sequences. Thus, the syndiotactic parts of the polypropylene have a higher comonomer content than the isotactic parts.

With preference, at least 55 wt.% of comonomer, as based on the total comonomer weight in the polypropylene is found in the "r" sequences, preferably at least 60 wt.%, more preferably at least 62 wt.%.

In a preferred embodiment, the polypropylene of the disclosure has a content of "m" sequences of at most 80 % as determined by $^{13}$C-NMR analysis, preferably of at most 78 %, more preferably of at most 76 %, and even more preferably of at most 75 %. With preference, the polypropylene of the disclosure has a content of "m" sequences of at least 53 % as determined by $^{13}$C-NMR analysis, preferably of at least 55 %, more preferably of at least 60 %, and even more preferably of at least 63 %.

The polypropylene of the disclosure is characterized by an isotacticity for which the content of mmmm pentads is a measure. Preferably the content of mmmm pentads polypropylene has a content of mmmm pentads ranging from 45 % to 80 % as determined by $^{13}$C-NMR analysis. Preferably, the content of mmmm pentads is at most 78 %, more preferably it is at most 75 %. With preference, the content of mmmm pentads is at least 48%, more preferably it is at least 50%. The isotacticity may be determined by $^{13}$C-NMR analysis as described in the test methods.

In a preferred embodiment, the polypropylene of the disclosure has a content of "r" sequences of at most 50 % as determined by $^{13}$C-NMR analysis, preferably of at most 45 %, more preferably of at most 40 %, and even more preferably of at most 38 %. With preference, the polypropylene of the disclosure has a content of "r" sequences of at least 21 % as determined by $^{13}$C-NMR analysis, preferably of at least 22 %, more preferably of at least 23 %, and even more preferably of at least 25 %.

The polypropylene of the disclosure is characterized by a syndiotacticity for which the content of rrrr pentads is a measure. Syndiotactity may also be measured by $^{13}$C-NMR analysis as described in the test methods and may be expressed as the percentage of syndio pentads (% rrrr). As used herein, the term "syndio pentads" refers to successive methyl groups located on alternate sides of the polymer chain. Preferably the content of rrrr pentads polypropylene has a content of rrrr pentads ranging from 5 % to 45 % as determined by $^{13}$C-NMR analysis. Preferably, the content of rrrr pentads is at most 43%, more preferably it is at most 40 %. With preference, the content of rrrr pentads is at least 5% or at least 10 %, more preferably it is at least 20 %; most preferably is at least 25 % and even most preferably of at least 30%. The syndiotacticity may be determined by $^{13}$C-NMR analysis as described in the test methods.

It is reminded that syndiotactic polypropylene is polypropylene wherein the methyl groups attached to the tertiary carbon atoms of the successive monomeric unit are arranged as racemic dyads. In other words, the methyl groups in isotactic polypropylene lie on the same side of the polymer backbone whereas in syndiotactic polypropylene the methyl groups lie on alternate sides of the polymer backbone. In the absence of any regular arrangement of the methyl groups on the polymer backbone, the polymer is atactic.

In the preparation of the polypropylene according to the disclosure, a certain amount of atactic polymer may be produced. This atactic polymer is soluble in xylene and is thus named the xylene soluble fraction (XS%). The xylene soluble fraction is indicative of the extent of a crystalline polymer formed. In an embodiment, the polypropylene of the disclosure has a xylene soluble fraction of at least 15 %, preferably of at least 20 % more preferably of at least 25 %, as relative to the total weight of the polypropylene. The xylene soluble faction is determined by ASTM D5492-17.

With preference, the polypropylene has a molecular weight distribution ranging from 2 to 5, preferably ranging from 2.5 to 4. With preference, the polypropylene has a monomodal molecular weight distribution (MWD).

Preferably, the polypropylene has a melt flow index ranging from 0.1 to 10 g/10 min; preferably, ranging from 0.2 to 5 g/10 min; more preferably, ranging from 0.5 to 2 g/10 min as determined according to ISO 1133 at 230 °C under a load of 2.16 kg. The value of MFI of the polypropylene is obtained without degradation treatment.

The polypropylene has a density at room temperature ranging from 0.850 g/cm$^3$ to 0.950 g/cm$^3$. Preferably the polypropylene has a density at room temperature ranging from 0.870 g/cm$^3$ to 0.920 g/cm$^3$.

### Process to produce the polypropylene

The polypropylene of the disclosure comprising syndiotactic polypropylene and the isotactic polypropylene resins are preferably prepared in a reactor under bulk conditions. More preferably said syndiotactic polypropylene and/or isotactic polypropylene are produced in a loop reactor that preferably comprises interconnected pipes defining a reactor path and wherein liquid propylene is injected. Preferably, the polypropylene comprising the syndiotactic polypropylene and the isotactic polypropylene is produced in a single loop reactor or a double loop reactor, comprising two loop reactors connected in series, but with both the isotactic part and the syndiotactic part of the polypropylene being produced in all reactors.

The single-site catalyst-based catalytic systems are known to the person skilled in the art. Amongst these catalysts, metallocene catalysts are preferred. The metallocene catalysts are compounds of Group IV transition metals of the periodic table such as titanium, zirconium, hafnium, etc., and have a coordinated structure with a metal compound and a ligand composed of one or two groups of cyclopentadienyl, indenyl, fluorenyl or their derivatives. The use of metallocene catalysts in the polymerisation of olefins has various advantages. Metallocene catalysts have high activities and are capable of preparing polymers with enhanced physical properties.

The disclosure provides a polymerization process using a single-site catalyst composition, preferably a metallocene catalyst composition that comprises a mixture of a single-site catalyst component A and a single-site catalyst component B on a single support. The single-site catalyst component A is a metallocene catalyst component able to polymerize isotactic polypropylene, whereas the single-site catalyst component B is a metallocene catalyst component able to polymerize syndiotactic polypropylene.

The single-site catalyst component A

According to the disclosure, the single-site catalyst component A of the catalyst composition has the formula:

$$(Ind)_2R^1MQ_2 \ (1) \text{ or } (IndH_4)_2R^2MQ_2 \qquad (2)$$

wherein:

- each Ind is the same or different and is a substituted or unsubstituted indenyl group;
- each $(IndH_4)$ is the same or different and is a substituted or unsubstituted tetrahydroindenyl group;
- $R^1$ and $R^2$ are each a structural bridge imparting stereorigidity to the component and are selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1-C_{10}$ alkyl, $C_5-C_7$ cycloalkyl, $C_6-C_{15}$ aryl, alkylaryl with $C_1-C_{10}$ alkyl and $C_6-C_{15}$ aryl, or any two neighbouring R may form a cyclic saturated or non-saturated $C_4-C_{10}$ ring; each $R^3$ and $R^4$ may, in turn, be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen;

Some specific examples of preferred catalysts according to the present disclosure are the following:

- $Me_2Si(2\text{-}Me\text{-}Benz\text{-}Ind)_2ZrCl_2$
- $Me_2Si(2\text{-}Me\text{-}4\text{-}Naphthyl\text{-}Ind)_2ZrCl_2$
- $Me_2Si(2\text{-}Me\text{-}Ind)_2ZrCl_2$
- $Et(Ind)_2ZrCl_2$
- $Et(IndH_4)_2ZrCl_2$
- $Me_2Si(2\text{-}Me\text{-}4,5\text{-}Benzyl\text{-}Ind)_2ZrCl_2$
- $(C_6H_{11})(Me)Si(2\text{-}Me\text{-}4\text{-}(4'tBuPh)Ind)_2ZrCl_2$

The single-site catalyst

The single-site catalyst component (or metallocene component B) capable of producing a syndiotactic polypropylene is described in many patents such as US6184326 B1 which is included by reference in its entirety.

Preferably, the single-site catalyst component B has the formula:

$$R^1(CpR^5_s)(FluR^6_t)MQ_2 \qquad (3)$$

wherein:

- Cp is a substituted or unsubstituted cyclopentadienyl ring;
- Flu is a substituted or unsubstituted fluorenyl ring;
- each $R^5$ and $R^6$ is the same or different and is hydrogen or a hydrocarbyl radical having from 1-20 carbon atoms, a halogen, an alkoxy, and alkoxy alkyl or an alkylamino radical;
- s is an integer of from 0-4;
- t is an integer of from 0-8;

- $R^1$ is a structural bridge imparting stereorigidity to the component and is selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1-C_{10}$ alkyl, $C_5-C_7$ cycloalkyl, $C_6-C_{15}$ aryl, alkylaryl with $C_1-C_{10}$ alkyl and $C_6-C_{15}$ aryl, or any two neighbouring R may form a cyclic saturated or non-saturated $C_4-C_{10}$ ring; each $R^3$ and $R^4$ may, in turn, be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen.

A specific example of a preferred catalyst according to the present disclosure is $Ph_2C(Cp)(Flu)ZrCl_2$.

The single-site catalyst components A and B of the present catalyst system can be mixed by a physical process (physical blending), such as by slurrying a powered form of the catalysts together in a hydrocarbon solvent. Alternatively, they can be mixed by a chemical process (chemical blending). Chemical blending can be effected by forming a solution containing both catalysts A and B and adding the solution to the support. Supporting techniques are similar to those described in WO2012/001160 A2.

The proportion of components A and B in the catalyst composition depends on the targeted respective isotacticity and sydiotacticity of the polypropylene according to the disclosure.

In a preferred embodiment, the catalyst composition comprises from 60 to 90 wt.% of the single-site catalyst component A as based on the total weight of both the single-site components A and B contained in the catalyst composition.

In addition to the catalyst components A and B, the catalyst composition may comprise one or more co-catalysts capable of activating the catalysts components A and B. Useful co-catalysts may be selected from alumoxane or ionic activators. Preferably the co-catalyst is an ionic activator. In an embodiment, the co-catalyst is an alumoxane selected from methylalumoxane, modified methyl alumoxane, ethylalumoxane, isobutylalumoxane, or any combination thereof. Preferably the co-catalyst is methylalumoxane (MAO).

With preference, the polymerization reaction is performed in presence of a co-activator being a trialkylaluminium selected from tri-ethyl aluminum (TEAL), tri-iso-butyl aluminum (TiBAL), trimethyl aluminum (TMA), and methyl-methyl-ethyl aluminum (MMEAL), more preferably the co-activator is tri-iso-butyl aluminum (TiBAL).

The metallocene may be supported according to any method known in the art. In the event it is supported, the support used in the present disclosure can be any organic or inorganic solid, particularly a porous support such as silica, talc, inorganic oxides, and resinous support material such as polyolefin. Preferably, the support material is an inorganic oxide in its finely divided form.

The polymerisation of propylene and one or more comonomers in the presence of a metallocene-based catalyst composition can be carried out according to known techniques in one or more polymerisation reactors. The metallocene syndiotactic polypropylene is preferably produced by polymerisation in liquid propylene at temperatures in the range from 20 °C to 100 °C. Preferably, temperatures are in the range from 60 °C to 80 °C. The pressure can be atmospheric or higher. It is preferably between 2.5 and 5.0 MPa. The molecular weight of the polymer chains, and in consequence the melt flow of the metallocene syndiotactic polypropylene, is mainly regulated by the addition of hydrogen to the polymerisation medium.

Preferably, the metallocene polypropylene is recovered from the one or more polymerisation reactors without post-polymerisation treatment to reduce its molecular weight and/or narrow its molecular weight distribution, such as can be done by thermal or chemical degradation. An example of chemical degradation is visbreaking, wherein the syndiotactic polypropylene is reacted for example with an organic peroxide at elevated temperatures, and/or in an extruder or pelletising equipment.

**Test methods**

The melt flow index ($MFI_{PP}$) of the syndiotactic polypropylene or syndiotactic polypropylene composition is determined according to ISO 1133 at 230 °C under a load of 2.16 kg.

Molecular weights are determined by Size Exclusion Chromatography (SEC) at high temperature (145 °C). A 10 mg syndiotactic polypropylene sample is dissolved at 160 °C in 10 mL of trichlorobenzene (technical grade) for 1 hour. Analytical conditions for the GPC-IR from Polymer Char are:

- Injection volume: +/- 0.4 mL;
- Automatic sample preparation and injector temperature: 160 °C;
- Column temperature: 145 °C;
- Detector temperature: 160 °C;
- Column set: 2 Shodex AT-806MS and 1 Styragel HT6E;

- Flow rate: 1 mL/min;
- Detector: IR5 Infrared detector (2800-3000 cm$^{-1}$);
- Calibration: Narrow standards of polystyrene (commercially available);
- Calculation for polypropylene: Based on Mark-Houwink relation ($\log_{10}(M_{PP}) = \log_{10}(M_{PS})-0{,}25323$); cut off on the low molecular weight end at $M_{PP} = 1000$;

The molecular weight averages used in establishing molecular weight/property relationships are the number average ($M_n$), weight average ($M_w$) and z average ($M_z$) molecular weight. These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight $M_i$. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

The molecular weight distribution (MWD) is then calculated as Mw/Mn.

The $^{13}$C-NMR analysis is performed using a 400 MHz or 500 MHz Bruker NMR spectrometer under conditions such that the signal intensity in the spectrum is directly proportional to the total number of contributing carbon atoms in the sample. Such conditions are well known to the skilled person and include for example sufficient relaxation time etc. In practice, the intensity of a signal is obtained from its integral, i.e. the corresponding area. The data are acquired using proton decoupling, 2000 to 4000 scans per spectrum with 10 mm room temperature through or 240 scans per spectrum with a 10 mm cryoprobe, a pulse repetition delay of 11 seconds and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenise the sample, followed by the addition of hexadeuterobenzene ($C_6D_6$, spectroscopic grade) and a minor amount of hexamethyldisiloxane (HMDS, 99.5+ %), with HMDS serving as an internal standard. To give an example, about 200 mg to 600 mg of the polymer is dissolved in 2.0 mL of TCB, followed by addition of 0.5 mL of $C_6D_6$ and 2 to 3 drops of HMDS.

Following data acquisition, the chemical shifts are referenced to the signal of the internal standard HMDS, which is assigned a value of 2.03 ppm.

The syndiotacticity is determined by $^{13}$C-NMR analysis on the total polymer following the method described in US6184326 B1 which is incorporated by reference in its entirety.

The isotacticity is determined by $^{13}$C-NMR analysis on the total polymer. In the spectral region of the methyl groups, the signals corresponding to the pentads mmmm, mmmr, mmrr and mrrm are assigned using published data, for example, A. Razavi, Macromol. Symp., vol. 89, pages 345-367. Only the pentads mmmm, mmmr, mmrr and mrrm are taken into consideration due to the weak intensity of the signals corresponding to the remaining pentads. For the signal relating to the mmrr pentad a correction is performed for its overlap with a methyl signal related to 2,1-insertions. The percentage of mmmm pentads is then calculated according to

$$\% \text{ mmmm} = \text{AREA}_{\text{mmmm}} / (\text{AREA}_{\text{mmmm}} + \text{AREA}_{\text{mmmr}} + \text{AREA}_{\text{mmrr}} + \text{AREA}_{\text{mrrm}}) \bullet 100$$

The comonomer content of a polypropylene is determined by $^{13}$C-NMR analysis of pellets according to the method described by G.J. Ray et al. in Macromolecules, vol. 10, n° 4, 1977, p. 773-778.

Melting temperatures $T_m$ were determined according to ISO 3146 on a DSC Q2000 instrument by TA Instruments. To erase the thermal history the samples are first heated to 200 °C and kept at 200 °C for 3 minutes. The reported melting temperatures $T_{melt}$ are then determined with heating and cooling rates of 20 °C/min.

DSC curves ((Differential Scanning Calorimetry curves) were obtained in the same manner.

The following non-limiting examples illustrate the disclosure.

**Examples:**

Example 1: catalyst composition synthesis

A catalyst composition comprising 30 wt.% of catalyst component A and 30 wt.% of catalyst component B was prepared.

Catalyst component A was $(C_6H_{11})(Me)Si(2-Me-4-(4'tBuPh)Ind)_2ZrCl_2$. This catalyst can produce isostatic polypropylene.

Catalyst component B was $Ph_2C(Cp)(Flu)ZrCl_2$. This catalyst can produce syndiotactic polypropylene.

Both catalyst components are supported on a single support. The support synthesis was as follows: 10.656 g of the dry silica PD12052 is introduced into a round-bottomed flask tricols of 500 mL. 140 mL of toluene are introduced in the round-bottom flask. 25 mL of MAO (30 wt.%) are added dropwise with a dropping funnel. The dropping funnel is rinsed with 20 mL of dry toluene. The reaction mixture was heated 4h at 110°C (100 rpm). The reaction mixture is filtered rapidly through a Buchner funnel (250 mL/por 3). The powder is washed rapidly with 40 mL of dry toluene (3 times) and with 40 mL of dry pentane (2 times). The powder is dried under low atmosphere until a constant weight.

Precontact with TiBAL

0.041 g of catalyst component A and 0.088 g of catalyst component B were weighted and put in a 3-necked flask of 250 mL. The flask was fixed to the agitator and 48 mL of TiBAL was added. The precontact lasts 1 hour in 20°C.

Deposition

Then, 9.979 g of PD12052/MAO were added and it was waited 2 hours in 20°C to perform the deposition. The mixture filtered and washed twice with pentane. The powder was vacuum-dried 2 hours. The catalyst composition was then stored in the oil (20 wt.%) and under cold conditions.

Result of ICP analyses: total metallocene loading 1 wt.% on PD12052/MAO and 14.2 wt.% of Al.

Example 2: polymerization

This catalyst was then used to produce polypropylene in a single bulk reactor.
Conditions:

- 50 mg of supported catalyst
- 1 mL TiBAL 10 wt.% (25 ppm)
- 4.5 L propylene (A3/C3 = 0.03 g/kg)
- 60°C/200 rpm
- 1.02 NL $H_2$

Results are shown in Table 1.

Table 1. Polymerization results.

|    | C2 | C2 | Time | Weight | Productivity | Activity | MFR | XS |
|----|----|----|------|--------|--------------|----------|-----|----|
|    | NL | 9  | min. | Fluff (g) | g/g | g/g/h | g/10' | % |
| E1 | 0  | 0  | 60   | 605    | 12100        | 12100    | 0.5 | 14.2 |

(continued)

|  | C2 | C2 | Time | Weight | Productivity | Activity | MFR | XS |
|---|---|---|---|---|---|---|---|---|
|  | NL | 9 | min. | Fluff (g) | g/g | g/g/h | g/10' | % |
| E2 | 3 | 3,9 | 30 | 530 | 10600 | 21200 | 0.6 | 26.1 |
| E3 | 6 | 7,8 | 30 | 480 | 9600 | 19200 | 0.85 | 33.2 |

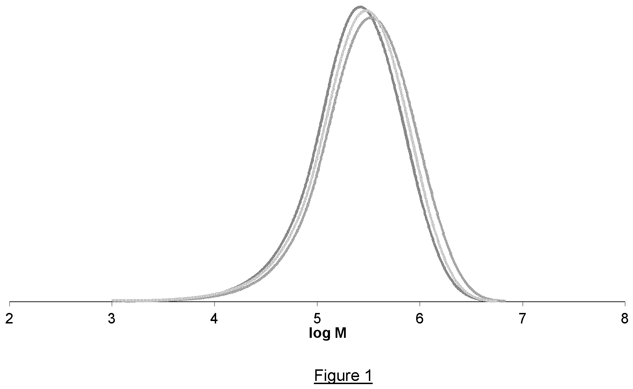

Catalyst activity increases significantly with the addition of ethylene. It is also observed that the higher the ethylene concentration, the higher the MFR. The xylene soluble fraction is 14.2% for the homopolymer and increases as the concentration of ethylene increases. Products were also analyzed by GPC, DSC and NMR. Results are summarized in table 2. The curves for molecular weight distribution are given in figure 1.

Table 2. Product characterization

|  | Mn | Mw | Mz | D | Tm1 | Tm2 | ΔH | C2 |
|---|---|---|---|---|---|---|---|---|
|  | Da | Da | Da | - | °C | °C | J/g | % |
| E1 | 144384 | 467527 | 999011 | 3.2 | 122.8 | 149.7 | 67.0 | 0 |
| E2 | 116479 | 401566 | 829404 | 3.4 | 110.0 | 148.1 | 58.1 | 0.6 |
| E3 | 117992 | 365597 | 768439 | 3.1 | 103.2 | 146.4 | 51.4 | 1.4 |

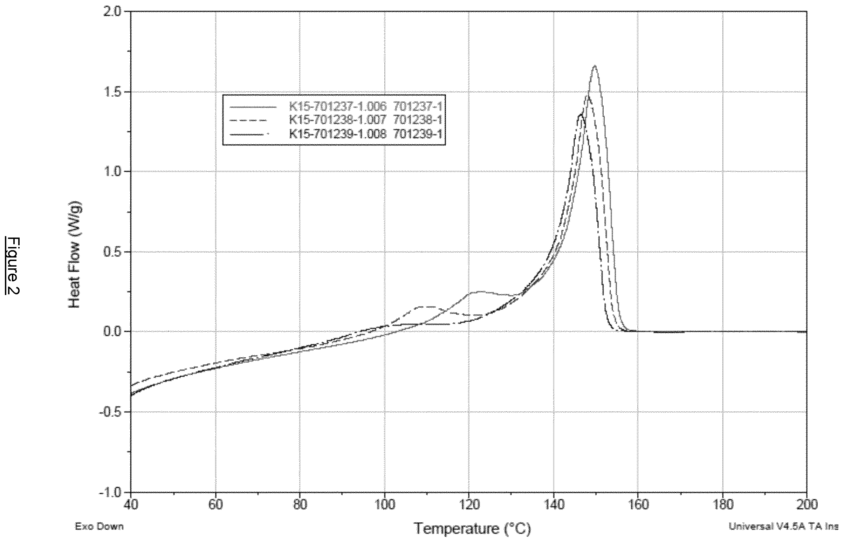

The overlay of the DSC curves is given in figure 2, results are reported in table 2. It can be seen that the resins produced show DSC curves with two peaks. The first one corresponds to the syndiotactic polypropylene component and the second one to the isotactic polypropylene component. It confirms the presence of the two products. The lower melting temperature of copolymers (especially for the peak corresponding to sPP) confirms ethylene incorporation as it is known that 1 wt.% ethylene in iPP or sPP using this type of catalyst systems reduces the melting temperature by 7-8°C.

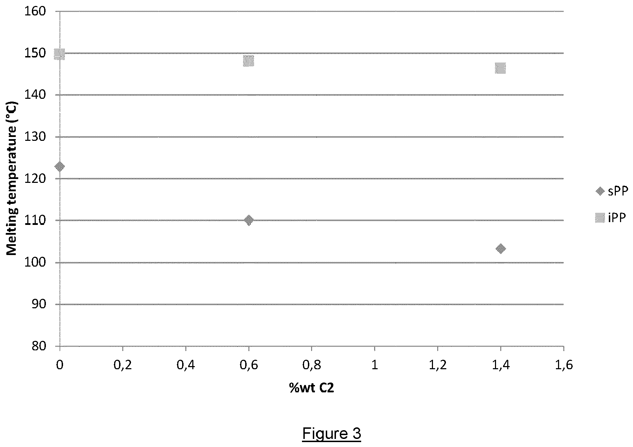

The difference in copolymerization behaviour of the two catalyst components A and B is further illustrated by considering the melting temperature of the copolymer produced as a function of ethylene concentration. The results are reported in figure 3. When ethylene is added in the process, melting temperatures decrease for sPP indicating that comonomer is mainly incorporated in syndiotactic blocks whereas no significant change is observed for the peaks corresponding to iPP.

Tacticity of the three resins produced was also evaluated by NMR and the results are illustrated in Table 3. The conclusions are nearly the same for the three products, about 70% of the resin is composed of "m" sequences.

Table 3. Tacticity of the three resins produced.

|  | E1 | E2 | E3 |
|---|---|---|---|
|  | % | % | % |
| Sequence | % | % | % |
| "m" | 73.78 | 70.92 | 68.95 |
| "r" | 26.22 | 29.08 | 31.05 |

Table 4. Ethylene content in the two copolymers.

|  | E2 | E3 |
|---|---|---|
| wt. % C2- | 0.6 | 1.4 |
| % r-Sac | 66.0 | 64.2 |
| % m-Sac | 34.0 | 35.8 |

Finally, Table 4 shows that for E2, 66% of ethylene is found in "r" sequences and 64.2% of ethylene is found in syndiotactic blocks for E3. These results confirm the selectivity preference of ethylene as shown in DSC curves.

**Claims**

1. Polypropylene, **characterized by**:

   - a content of "m" sequences of at least 50 % as determined by $^{13}$C-NMR analysis,
   - a content of mmmm pentads of at least 45 % as determined by $^{13}$C-NMR analysis,
   - a content of "r" sequences of at least 20 % as determined by $^{13}$C-NMR analysis, wherein the polypropylene is a copolymer of propylene and one or more comonomers selected from ethylene and $C_4$-$C_{20}$ comonomers, wherein the comonomer content of the polypropylene is ranging from 0.2 to 5.0 wt.% relative to the total weight of polypropylene as determined by $^{13}$C-NMR analysis, and wherein the content of comonomer in the "r" sequences is higher than the content of comonomer in the "m" sequences.

2. The polypropylene according to claim 1 **characterized in that** the comonomer content of the polypropylene is ranging from 0.2 to 4.5 wt.% relative to the total weight of polypropylene, preferably ranging from 0.3 to 4.0 wt.%, more preferably ranging from 0.4 to 3.0 wt.%, even more preferably ranging from 0.5 to 2.0 wt.%, as determined by $^{13}$C-NMR analysis.

3. The polypropylene according to claim 1 or 2 **characterized in that** content of "m" sequences is of at least 60 % as determined by $^{13}$C-NMR analysis and/or the content of "m" sequences is of at most 80 % as determined by $^{13}$C-NMR analysis.

4. The polypropylene according to any one of claim 1 to 3, **characterized in that** comonomer distribution ratio between the "r" sequences and the "m" sequences is at least 1.5:1.0. as determined by $^{13}$C-NMR analysis, preferably 2.0:1.0, more preferably 3.0:2.0.

5. The polypropylene according to any one of claims 1 to 4, **characterized in that** it shows a DSC curve with at least two temperature peaks corresponding to at least two melting temperatures Tm1 and Tm2 and the lowest melting temperature Tm1 is at most 130°C and/or **in that** it shows a DSC curve with at least two temperature peaks corresponding to at least two melting temperatures Tm1 and Tm2 and the highest melting temperature Tm2 is least 135°C; and/or **in that** the polypropylene shows at least two melting temperatures Tm1 and Tm2 and the difference between the two melting temperatures Tm1 and Tm2 is at least 30°C.

6. The polypropylene according to any one of claims 1 to 5 **characterized in that** at least 55 wt.% of comonomer, as based on the total comonomer weight in the polypropylene is found in the r sequences as determined by $^{13}$C-NMR analysis; and/or **in that** at least 20 wt.% of comonomer, as based on the total comonomer weight in the polypropylene is found in the "m" sequences as determined by $^{13}$C-NMR analysis

7. The polypropylene according to any one of claims 1 to 6 **characterized in that** it has a molecular weight distribution ranging from 2 to 5, preferably ranging from 2.5 to 4.

8. The polypropylene according to any one of claims 1 to 7 **characterized in that** it has a xylene soluble fraction of at least 15 % as determined by ASTM D5492-17, preferably of at least 20 % more preferably of at least 25 %.

9. The polypropylene according to any one of claims 1 to 8 **characterized in that** it has a melt flow index ranging from 0.1 to 10 g/10 min, preferably ranging from 0.2 to 5 g/10 min, more preferably ranging from 0.5 to 2 g/10 min as determined according to ISO 1133 at 230 °C under a load of 2.16 kg.

10. The polypropylene according to any one of claims 1 to 9 **characterized by** a content of rrrr pentads of at least 10 % as determined by $^{13}$C-NMR analysis and/or a content of mmmm pentads of at least 50 % as determined by $^{13}$C-NMR analysis.

11. Process for the production of polypropylene according to any one of claims 1 to 10, said process comprising the step of polymerizing propylene monomer and one or more olefin comonomers selected from ethylene and $C_4$-$C_{20}$ comonomer, in one or more polymerization reactors in presence of a catalyst composition **characterized in that** said catalyst composition comprises a mixture of a single-site catalyst component A and a single-site catalyst component B;
    with the single-site catalyst component A having the formula:

$$(Ind)_2R^1MQ_2 \ (1) \ \text{or} \ (IndH_4)_2R^2MQ_2 \qquad (2)$$

wherein

- each Ind is the same or different and is a substituted or unsubstituted indenyl group;
- each $(IndH_4)$ is the same or different and is a substituted or unsubstituted tetrahydroindenyl group;
- $R^1$ and $R^2$ are each a structural bridge imparting stereorigidity to the component and are selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighbouring R may form a cyclic saturated or non-saturated $C_4$-$C_{10}$ ring; each $R^3$ and $R^4$ may in turn be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen;

and with the single-site catalyst component B having the formula:

$$R^1(CpR^5_s)(FluR^6_t)MQ_2 \qquad (3)$$

wherein

- Cp is a substituted or unsubsitituted cyclopentadienyl ring;
- Flu is a substituted or unsubstituted fluorenyl ring;
- each $R^5$ and $R^6$ is the same or different and is hydrogen or hydrocarbyl radical having from 1-20 carbon atoms, a halogen, an alkoxy, and alkoxy alkyl or an alkylamino radical;
- s is an integer of from 0-4;
- t is an integer of from 0-8;
- $R^1$ is a structural bridge imparting stereorigidity to the component and is selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighbouring R may form a cyclic saturated or non-saturated $C_4$-$C_{10}$ ring; each $R^3$ and $R^4$ may in turn be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen.

12. The process according to claim 11 **characterized in that** the catalyst composition comprises from 60 to 90 wt.% of the single-site catalyst component A as based on the total weight of both the single-site catalyst components A and B contained in the catalyst composition.

13. The process according to any one of claims 11 to 12 **characterized in that** the single-site catalyst component A has the formula:

$$(Ind)_2R^1MQ_2 \qquad (1)$$

wherein

- each Ind is the same or different and is a substituted or unsubstituted indenyl group;
- $R^1$ is a structural bridge imparting stereorigidity to the component and is selected from an isopropylidene, $Me_2C$, $Ph_2C$, ethylenyl, $Me_2S$ or $Me_2Si$ group
- M is selected from Ti, Zr, or Hf;
- Q is hydrocarbyl radical such as an alkyl, aryl, alkenyl, alkylaryl, or arylalkyl radical having 1-20 carbon atoms or is a halogen;

with preference the single-site catalyst component A is selected from $Me_2Si(2\text{-Me-Benz-Ind})_2ZrCl_2$ ; $Me_2Si(2\text{-Me-}4\text{-Naphthyl-Ind})_2ZrCl_2$ ; $Me_2Si(2\text{-Me-Ind})_2ZrCl_2$; $Et(Ind)_2ZrCl_2$; $Et(IndH_4)_2ZrCl_2$; $Me_2Si(2\text{-Me-}4,5\text{-Benzyl-Ind})_2ZrCl_2$; $(C_6H_{11})(Me)Si(2\text{-Me-}4\text{-}(4\text{'tBuPh})Ind)_2ZrCl_2$; more preferably the single-site catalyst component A is $(C_6H_{11})(Me)Si(2\text{-Me-}4\text{-}(4\text{'tBuPh})Ind)_2ZrCl_2$.

**14.** Article comprising the polypropylene of any one of claims 1 to 10 and/or the polypropylene produced by the process of any one of claims 11 to 13, **characterized in that** the article is a film, with preference the article is a biaxially oriented multi-layered film.

**15.** Use of a single-site based catalytic system comprising a catalyst composition comprising a mixture of a single-site catalyst component A and a single-site catalyst component B;
with the single-site catalyst component A having the formula:

$$(Ind)_2R^1MQ_2 \ (1) \ or \ (IndH_4)_2R^2MQ_2 \qquad (2)$$

wherein

- each Ind is the same or different and is a substituted or unsubstituted indenyl group;
- each $(IndH_4)$ is the same or different and is a substituted or unsubstituted tetrahydroindenyl group;
- $R^1$ and $R^2$ are each a structural bridge imparting stereorigidity to the component and are selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1-C_{10}$ alkyl, $C_5-C_7$ cycloalkyl, $C_6-C_{15}$ aryl, alkylaryl with $C_1-C_{10}$ alkyl and $C_6-C_{15}$ aryl, or any two neighbouring R may form a cyclic saturated or non-saturated $C_4-C_{10}$ ring; each $R^3$ and $R^4$ may in turn be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen;

and with the single-site catalyst component B having the formula:

$$R^1(CpR^5{}_s)(FluR^6{}_t)MQ_2 \qquad (3)$$

wherein

- Cp is a substituted or unsubsitituted cyclopentadienyl ring;
- Flu is a substituted or unsubstituted fluorenyl ring;
- each $R^5$ and $R^6$ is the same or different and is hydrogen or hydrocarbyl radical having from 1-20 carbon atoms, a halogen, an alkoxy, and alkoxy alkyl or an alkylamino radical;
- s is an integer of from 0-4;
- t is an integer of from 0-8;
- $R^1$ is a structural bridge imparting stereorigidity to the component and is selected from $-(CR^3R^4)_p-$ or $-(SiR^3R^4)_p-$ with p = 1 or 2, preferably it is $-(SiR^3R^4)-$;
- $R^3$ and $R^4$ are each independently selected from the group consisting of hydrogen, $C_1-C_{10}$ alkyl, $C_5-C_7$ cycloalkyl, $C_6-C_{15}$ aryl, alkylaryl with $C_1-C_{10}$ alkyl and $C_6-C_{15}$ aryl, or any two neighbouring R may form a cyclic saturated or non-saturated $C_4-C_{10}$ ring; each $R^3$ and $R^4$ may, in turn, be substituted in the same way;
- M is selected from Ti, Zr, or Hf;
- Q is hydrocarbyl radical such as an alkyl, aryl, alkenyl, alkylaryl, or arylalkyl radical having 1-20 carbon atoms or is a halogen;

for the production of a heat seal layer made from polypropylene, preferably the polypropylene is according to claim 1 to 10.

log M

Figure 1

Figure 2

Figure 3

Europäisches
Patentamt

European
Patent Office

Office européen
des brevets

# EUROPEAN SEARCH REPORT

Application Number

EP 20 17 8273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/070572 A2 (EXXONMOBIL CHEM PATENTS INC [US]) 12 September 2002 (2002-09-12) * claims 1-9; examples 1, 2A, 2B, 11, 12; tables 1A, 1B, 2, 7A * | 1-10,14 | INV. C08F210/06 C08F4/659 |
| X | WO 2015/082709 A1 (TOTAL RES & TECHNOLOGY FELUY [BE]; CENTRE NAT RECH SCIENT [FR]) 11 June 2015 (2015-06-11) * paragraph [0043]; claims 1-17; table 1; compounds 3b, 3j * | 1-15 | |
| X | WO 2013/176685 A1 (FINA TECHNOLOGY [US]; TIAN JUN [US] ET AL.) 28 November 2013 (2013-11-28) * paragraphs [0079] - [0116]; claims 1-21; example 9; tables 1-8; compound 'm' and MC6 * | 1-15 | |

TECHNICAL FIELDS
SEARCHED (IPC)

C08F

The present search report has been drawn up for all claims

| Place of search | Date of completion of the search | Examiner |
|---|---|---|
| Munich | 2 November 2020 | Bernhardt, Max |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 17 8273

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2020

| Patent document cited in search report | | Publication date | Patent family member(s) | | Publication date |
|---|---|---|---|---|---|
| WO 02070572 | A2 | 12-09-2002 | EP<br>JP<br>US<br>WO | 1373337 A2<br>2004528421 A<br>2001044506 A1<br>02070572 A2 | 02-01-2004<br>16-09-2004<br>22-11-2001<br>12-09-2002 |
| WO 2015082709 | A1 | 11-06-2015 | EP<br>JP<br>KR<br>US<br>US<br>WO | 3077427 A1<br>2016540076 A<br>20160097254 A<br>2016304639 A1<br>2018346618 A1<br>2015082709 A1 | 12-10-2016<br>22-12-2016<br>17-08-2016<br>20-10-2016<br>06-12-2018<br>11-06-2015 |
| WO 2013176685 | A1 | 28-11-2013 | US<br>WO | 2012322960 A1<br>2013176685 A1 | 20-12-2012<br>28-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1588843 A
- EP 1169499 A
- WO 03029303 A
- EP 0742227 A
- EP 0747406 A
- US 6184326 B1
- WO 2012001160 A2

**Non-patent literature cited in the description**

- **A. RAZAVI.** *Macromol. Symp.,* vol. 89, 345-367
- **G.J. RAY et al.** *Macromolecules,* 1977, vol. 10 (4), 773-778